# EUROPEAN PATENT APPLICATION

(11) **EP 1 475 916 A2**
(43) Date of publication of application: **10.11.2004**
(21) Application number: 04101877.1
(22) Date of filing: 30.04.2004
(51) Int. Cl.: H04L 1/00

(54) **Adaptive UWB transmission**

(30) Priority: 03.05.2003 KR 2003028426
(71) Applicant: Samsung Electronics Co., Ltd., Suwon-si, Gyeonggi-do (KR)
(72) Inventor: Choi, Yunhwa, Songpa-gu, Seoul (KR)
(74) Representative: Read, Matthew Charles

(57) **Abstract**

An ultra wideband (UWB) transceiver and a UWB signal transmitting and receiving method are provided, wherein data transmission can be efficiently performed according to channel condition by forwarding channel information obtained from a received signal to a data transmitter (100) and changing the data transmission scheme in the transmitter (100) according to the received channel condition, contrary to a related art UWB transceiver. In the UWB transceiver, channel information is calculated from a UWB pulse signal received over a UWB channel so that a UWB channel condition can be predicted and a data transmission scheme is changed according to the calculated channel information, whereby information transmission can be efficiently made according to the UWB channel condition. Thus, there is an advantage in that efficient data transmission/reception can be made by changing the data transmission scheme in accordance with the UWB channel condition.

## Description

The present invention relates to an ultra wideband (UWB) transceiver apparatus comprising transmitting means , receiving means and control means and to a UWB signal transceiving method, comprising receiving a UWB pulse signal via a UWB channel.

Wireless communication devices have recently become popular with the rapid development of wireless communication technologies. This has brought a lot of changes in people's lifestyles. In particular, much effort has been made in research on UWB communications capable of implementing high-speed wideband wireless communications and simultaneously providing existing wireless communication services without need for any additional frequency resources.

With UWB communications, information is transmitted and received using very short pulses (whose width is 1 to 4 nsec). Since extremely short pulses are used, the bandwidth of UWB pulse signals in a frequency domain may be as broad as about 10 GHz. Such UWB pulse signals have very low duty cycles. Thus, there are advantages in that the data transfer rate is very high, multiple accesses can be made and interference effects due to multiple paths can be reduced.

A transmitted signal may be subject to frequency selective fading, i.e. a transmitted signal may not arrive at a receiver due to deep fading. Currently proposed UWB standards specify a UWB transceiver that determines whether a given signal should be retransmitted on the basis of an acknowledge ("ACK") signal from a media access control ("MAC") level in the receiver without any corrections in the physical layer ("PHY") level. More specifically, when a transmitter has sent a signal to a receiver and the receiver in turn receives the signal successfully, the MAC level in the receiver will send the transmitter a feedback ACK signal indicating the successful reception of the signal.

However, if the transmitter has not received the feedback ACK signal from the receiver within a certain period of time, the transmitter will repeatedly transmit the same frame of data regardless of the current channel condition. Such retransmissions degrade the performance of high-speed and high-capacity UWB communication systems.

There is a need for a method capable of performing more efficient data transmission by determining a channel condition and adapting the data transmission scheme accordingly.

An object of the present invention is to provide a UWB transceiver and a method of transmitting and receiving UWB signals wherein data transmission can be efficiently performed according to channel condition by forwarding channel information obtained from a received signal to a data transmitter and changing the data transmission scheme in the transmitter according to the received channel condition.

Another object of the present invention is to allow adjustment of at least one of the channel coding rate, modulation order and data transmission power on the basis of channel information obtained from a received signal.

A further object of the present invention is to provide a system in which a Trellis-Coded Modulation ("TCM") or Turbo-Coded Modulation, i.e., a combination of channel coding and modulation/demodulation schemes, may be applied.

The present invention allows a signal-to-noise ratio ("SNR") obtained from a receiver to be communicated to a transmitter and a data transmission scheme to be changed according to the received SNR, so that data transmission can be efficiently performed according to UWB channel conditions.

The data transmission scheme allows at least one of the channel coding rate, modulation order and transmission power to be changed selectively or simultaneously according to the UWB channel condition as indicated by the received SNR. Furthermore, channel information corresponds to information obtained from a UWB pulse signal to allow a UWB channel condition to be determined, and it is defined as SNR, for example.

The channel coding rate may be defined as a ratio i/N of the number i of information bits to the number N of the total bits including the information bits and redundant bits added for reliable data transmission during coding. Furthermore, the modulation order may be defined as an order associated with a modulation scheme such as 4-PSK, 8-PSK and 16-PSK schemes.

An ultra wideband (UWB) transceiver apparatus, according to the present invention, characterised in that the receiving means is configured to determine channel information relating to a UWB channel in response to receiving a UWB signal via said UWB channel and the control means is configured to modify a transmission scheme of the transmitting means on the basis of said channel information, for transmitting data via said UWB channel. Thus, if the path quality of the UWB channel deteriorates, the link margin can be maintained by modifying at least one of the transmission power, the channel coding rate and the modulation order.

Preferably, the control means is configure to adjust at least one of channel coding rate, modulation order and transmission power on the basis of the channel information.

A UWB signal transceiving method, according to the present invention, is characterised by determining channel information relating to the UWB channel on the basis of the received UWB pulse signal and modifying a transmission scheme for data to be transmitted via the UWB channel on the basis of said channel characteristic.

Preferably, at least one of channel coding rate, modulation order and transmission power is modified on the basis of the channel information.

Embodiments of the present invention will now be described, by way of example, with reference to the accompanying drawings, in which:
Figure 1 is a schematic diagram illustrating the configuration of an embodiment of a UWB transceiver according to the present invention;
Figure 2 is a schematic diagram illustrating the configuration of an embodiment of a transmitter and receiver according to the present invention;
Figure 3 is a flowchart illustrating an embodiment of a UWB signal transmitting/receiving process according to the present invention;
Figure 4 is a schematic diagram illustrating an embodiment of a decoding 4-PSK process in the transmitter of Figure 2;
Figure 5 is a schematic diagram illustrating an embodiment of a 2/3 coding 4-PSK process in the transmitter of Figure 2; and
Figure 6 is a schematic diagram illustrating an embodiment of a 2/3 coding 8-PSK process in the transmitter of Figure 2.

In the following description of the UWB signal transmitting/receiving method using a UWB transceiver according to the present invention, since the UWB signal transmitting/receiving process performed between devices through their own UWB transceivers can be performed for each device, only the operating process for one device will be described.

In explaining the configuration and operation of the UWB transceiver according to the present invention, it has been described that the present invention is implemented in a home network environment, such as a wireless personal area network (PAN). However, this is for illustrative purposes only and it will be understood by those skilled in the art that various changes and other equivalents may be made to a module capable of efficiently changing the data transmission scheme according to the UWB channel condition.

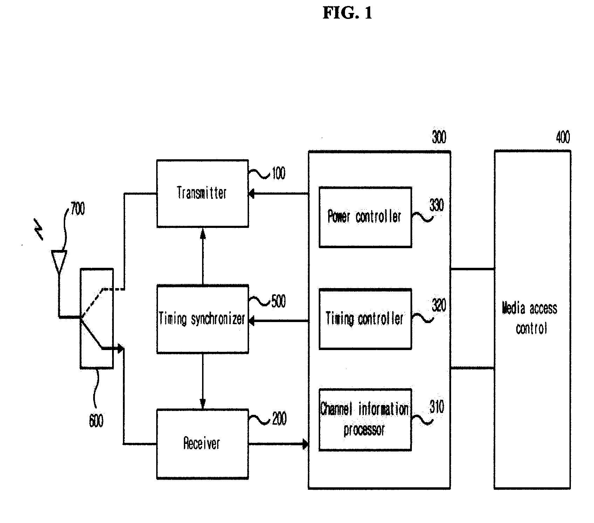

Referring to Figure 1, the UWB transceiver comprises a transmitter 100, a receiver 200, a baseband controller 300 and a MAC 400. In the embodiment shown in Figure 1, the UWB transceiver further comprises a timing synchronizer 500 for synchronising the transmitter 100 and receiver 200 in accordance with a control signal transmitted from the baseband controller 300, a T/R switch 600 for switching between transmitter and receiver circuits and an antenna 700 for transmitting and receiving UWB pulse signals.

The transmitter 100 performs channel coding and modulation of binary data, which is output from the baseband controller 300 for transmission, such that the binary data is suitable for transmission over a UWB channel, amplifies transmission power for the binary data and outputs the amplified binary data.

The receiver 200 calculates a SNR using a received UWB pulse signal, decodes the received signal into the original signal and outputs the decoded signal to the baseband controller 300.

The baseband controller 300 performs overall operation control for processing the transmission and reception of the UWB pulses through the transmitter 100 and the receiver 200, and comprises a channel information processor 310 for extracting the SNR calculated by the receiver 200 and applying the extracted SNR to the transmitter 100, a timing controller 320 for generating a timing control signal for synchronization between the transmitter 100 and the receiver 200 in connection with a modulation order for the signal to be transmitted and transmitting the generated control signal to the timing synchronizer 500, and a power controller 330 for generating another control signal in response to the SNR extracted by the channel information processor 310 and controlling the transmission power for the UWB pulse signal.

Since the respective components of the baseband controller 300 will operate independently, the baseband controller 300 may be configured differently according to the data transmission scheme. For example, in a case where the data transmission scheme is only configured to adjust the channel coding rate and/or the modulation order, the baseband controller 300 would comprise the channel information processor 310 and the timing controller 320. If the data transmission scheme is configured to further adjust the transmission power, the baseband controller 300 further comprises the power controller 330.

The MAC 400 manages UWB data communication, which will be performed in the Physical Layer Part specified in IEEE 802.15.3 wireless personal area network (WPAN).

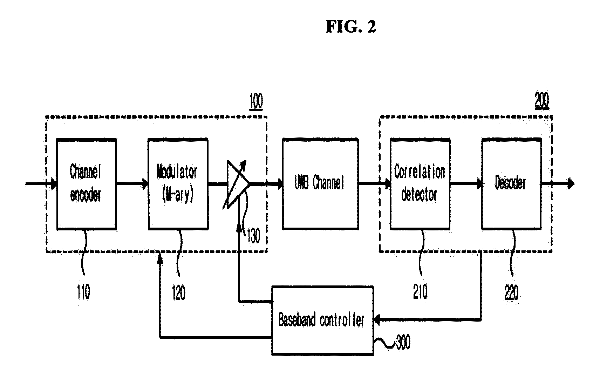

Referring to Figure 2, the transmitter 100 comprises a channel encoder 110 for performing channel coding of binary data, which is output from the baseband controller 300 for transmission, at a predetermined channel coding rate (i/N) suitable for transmission over a UWB channel, a modulator 120 for modulating the signal coded by the channel encoder 110 with a predetermined modulation order (M-ary) to generate a UWB pulse signal and an amplifier 130 for amplifying transmission power for the UWB pulse signal output from the modulator 120 so as to be suitable for the UWB channel transmission.

The receiver 200 comprises a correlation detector 210 for calculating the SNR value for the UWB pulse signal received through the antenna 700 over the UWB channel, and a decoder 220 for decoding the data sequence of the received UWB pulse signal into the original signal.

When a UWB pulse signal is initially transmitted through the transmitter 100, the receiver 200 will receive a feedback signal, e.g. an ACK signal, transmitted from a specific device for receiving the transmitted UWB pulse signal, and then cause the correlation detector 210 to calculate the SNR value.

The transmitter 100 and the receiver 200 are connected to the baseband controller 300, as illustrated in Figure 2. Accordingly, the transmitter 100 will receive the SNR value calculated in the receiver 200 via the channel information processor 310 of the baseband controller 300.

The transmitter 100 processes the information to be transmitted by setting the channel coding rate of the channel encoder 110 and/or the modulation order of the modulator 120 in accordance with the channel information received from the baseband controller 300.

For example, if the UWB channel condition, which can be determined based on the SNR value, is determined to be good, the channel coding rate will be increased approximately up to "1" in such a manner as "1/4 -> 1/2 -> 3/4 -> 1", or the modulation scheme will be changed from a 4-PSK (phase shift keying) modulation scheme to a 16-PSK modulation scheme in such a manner that the modulation order will be increased or both the channel coding rate and modulation order will be increased.

On the other hand, if the UWB channel condition is determined to be bad, the signal will be processed by lowering the coding rate or modulation order.

In addition, the transmission power of the amplifier 130 will be adjusted according to the power control signal transmitted from the baseband controller 300, based on the channel information.

In the above-described embodiment of a UWB transceiver, the SNR is calculated by the receiving unit 200, but it may be configured so that the SNR is calculated by at least one module of the transmitting unit 100, the receiving unit 200 and the baseband controller 300.

A UWB signal transmitting/receiving method using the above-described UWB transceiver will now be described. The UWB signal transmitting/receiving method generally comprises the steps of receiving a UWB pulse signal through a UWB channel, analyzing the received UWB pulse signal and providing channel information, with which a state of the UWB channel can be determined, and determining a transmission method for information to be transmitted, according to the channel information.

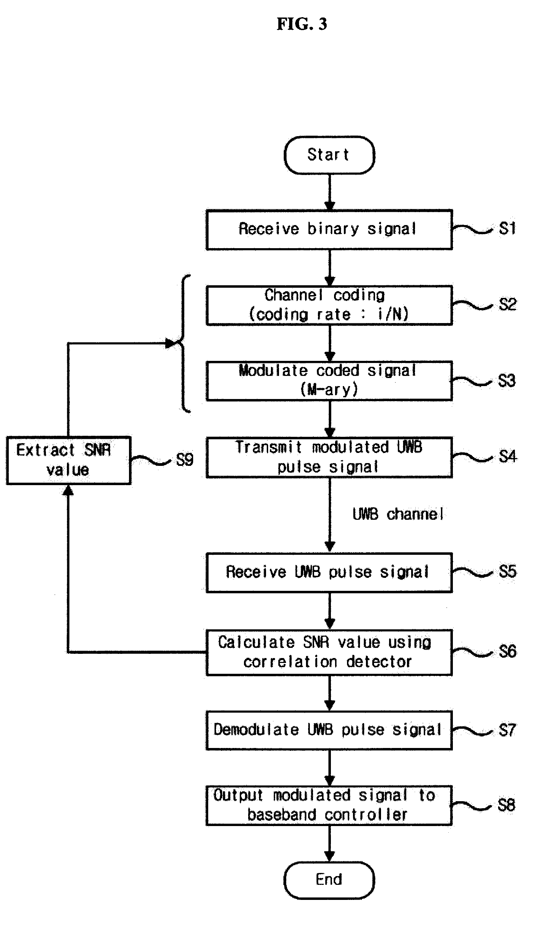

Referring to Figure 3, if a UWB transceiver ("first UWB transceiver") in a specific network device ("first device") intends to communicate with a UWB transceiver ("second UWB transceiver") in another predetermined network device ("second device"), the first UWB transceiver in the first device can transmit a message requesting data communications, in the form of a beacon signal, to the second device via a predetermined piconet coordinator (PNC) to determine whether data communications can be made with the second network device and then confirm whether the data communication can be made based on an ACK signal transmitted from the second UWB transceiver in the second device.

In the above process, when it is determined that data communication can be made between the first and second devices, a binary information signal, which is output from the baseband controller 300 for transmission, is input to the transmitter 100 in the first UWB transceiver (S1). Then, the input binary signal is processed such that it can be transmitted to the second device over the UWB channel.

That is, the channel encoder 110 in the transmitter 100 performs channel coding for the binary signal input from the baseband controller 300 at a predetermined coding rate (S2) and then the modulator 120 performs modulation for the channel coded binary signal with a predetermined modulation order (S3).

At this time, since the binary signal to be transmitted is the first signal to be transmitted, it will be coded to a channel at the lowest coding rate and then modulated with the lowest modulation order.

Then, the modulated UWB pulse signal is output to the antenna 700 so that it can be transmitted to the second device over the UWB channel (S4).

Next, the second UWB transceiver in the second device receives the UWB pulse signal transmitted from the first device through the antenna 700 over the UWB channel and transmits an ACK signal for the received UWB pulse signal to the first device.

When the second UWB transceiver in the second device receives the UWB pulse signal transmitted from the first network device through the antenna 700 over the UWB channel (S5), a receiver in the first UWB transceiver causes the correlation detector 210 to calculate an SNR value from the received UWB pulse signal (S6) and the decoder 220 to decode the channel coded data sequence (S7) and output the decoded data sequence to the baseband controller 300 (S8).

The baseband controller 300 outputs the decoded binary signal to the MAC 400, extracts the SNR value calculated from the receiver 200 and forwards the SNR value, as channel information, to the transmitter 100 such that the channel coding rate and the modulation order can be determined in the transmitter 100 based on the channel information (S9).

The transmitter 100 determines the UWB channel condition based on the SNR value input from the baseband controller 300 and selectively sets the channel coding rate, modulation order or transmission power according to the determined channel condition after the binary signal to be transmitted is received from the baseband controller 300.

That is, the channel encoder 110 in the transmitter 100 causes the binary signal input from the baseband controller 300 to be coded at a channel coding rate in accordance with the determined UWB channel condition, the modulator 120 causes the channel coded binary signal to be modulated with the modulation order determined according to the predicted UWB channel condition or both channel coding and modulation are performed.

Alternatively, the transmission power of the amplifier 130 is adjusted according to the determined UWB channel condition so that the UWB pulse signal can be transmitted through the antenna 700 over the UWB channel.

In this way, the data modulation scheme in the transmitter 100 according to the UWB channel condition will be repeatedly changed according to the SNR value obtained from the UWB pulse signal transmitted to the receiver 200.

By way of example, when a movie is played from a digital video disc (DVD) player onto a Digital Television (DTV) through a UWB data communication therebetween, the DVD player transmits a message requesting data communication with the DTV, as a beacon signal, to the PNC via the transmitter 100 in the UWB transceiver.

Then, the PNC transmits the received signal requesting the data communication to the DTV and simultaneously forwards an ACK signal received from the transmitter 100 in the UWB transceiver of the DTV to the DVD player, thereby identifying whether data communication between the DVD player and the DTV can be made.

The DVD player that has received the ACK signal from the DTV outputs movie data, which is divided into frames of a predetermined size according to the UWB communication protocol and will be transmitted to the DTV, to the transmitter 100 in the UWB transceiver through the baseband controller 300.

To transmit the movie data input into the transmitter 100 of the UWB transceiver, the input movie data are coded to a channel in the channel encoder 110 and the channel coded signal is modulated in the modulator 120 and amplified up to the predetermined transmission power in the amplifier 130.

In this process, at least one of the channel coding, modulation and amplification of the input data is determined depending on the UWB channel condition determined according to the SNR value calculated from the ACK signal which has been received at the receiver 200 from the DTV.

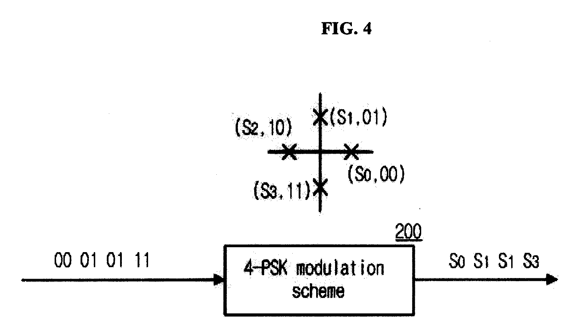

A case where the UWB channel condition is determined to be bad, based on the initially calculated SNR value, and thus a decoding 4-PSK modulation scheme is performed, will now be described. If the binary signal to be transmitted is given as "00 01 01 11", the modulator 120 causes two bits to be grouped into one symbol and then each symbol to be modulated into a corresponding analogue signal (S₀ S₁ S₁ S₃) as illustrated in Figure 4.

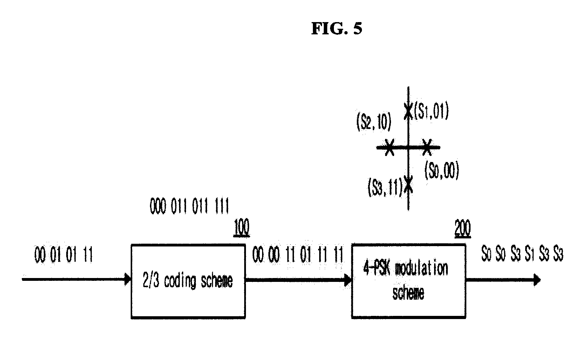

Referring to Figure 5, a case where the UWB channel condition is determined to be bad, based on the initially calculated SNR value, and thus channel encoding at 2/3 coding rate (i.e. two information bits and one redundant bit) and 4-PSK modulation are performed, will be described. If the binary signal to be transmitted is given as "00 01 01 11", the channel encoder 110 performs channel coding for the binary signal into "000 011 011 111" and the modulator 120 causes two bits of the encoded signal "000 011 011 111" to be grouped into one symbol and then each symbol to be modulated into a corresponding analogue signal (S₀ S₀ S₃ S₁ S₃ S₃).

In other words, the transmitter 100 in the DVD player performs the selective channel coding according to the UWB channel condition determined based on the SNR value calculated by the receiver 200, modulates the coded signal using the 4-PSK modulation scheme and transmits the modulated signal through the antenna over the UWB channel. Meanwhile, the UWB transceiver in the DTV receives the movie data, which is received over the UWB channel and modulated into the UWB pulse signal in the receiver 200 and then transmits an ACK signal for the received signal to the DVD player.

In the DVD player, the receiver 200 of the UWB transceiver calculates the SNR value based on the ACK signal transmitted from the DTV and the baseband controller 300 forwards the calculated SNR value to the transmitter 100.

The transmitter 100 sets the channel coding rate, modulation order or output voltage level for movie data awaiting transmission in accordance the UWB channel condition determined according to the input SNR value.

In a case where only the modulation order is changed in accordance with the UWB channel condition, the modulation order is increased and an 8-PSK modulation scheme is selected if the UWB channel condition has become good.

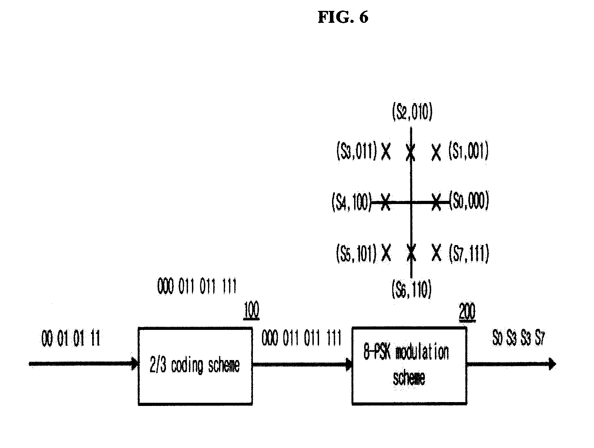

That is, if the binary signal to be transmitted is given as "00 01 01 11", as shown in Figure 6, the channel encoder 110 causes the binary signal to be channel coded into "000 011 011 111" and the modulator 120 causes three bits of the encoded signal "000 011 011 111" to be grouped into one symbol and each symbol to be modulated into a corresponding analogue signal (S₀ S₃ S₃ S₇).

Therefore, since the present invention allows the size of symbol for data transmission to be changed by adjusting the modulation order in the modulator according to the UWB channel condition, the UWB pulse signal can be efficiently transmitted.

In the above-described embodiment of the present invention, at least one of the channel coding rate, modulation order and data transmission power is changed so as to efficiently transmit a UWB pulse signal. However, it is also possible to adjust a predetermined parameter appropriately selected so as to increase the efficiency of the transmission signal, depending upon the configuration of a communication mode or a communication device.

Furthermore, efficient data transmission/reception can be made by changing the data transmission scheme in accordance with the UWB channel condition. Moreover, at least one of the channel coding rate, modulation order and data transmission power can be properly adjusted so as to efficiently transmit the UWB pulse signal.

## Claims

1. An ultra wideband (UWB) transceiver apparatus comprising transmitting means (100), receiving means (200) and control means (300), **characterised in that** the receiving means (200) is configured to determine channel information relating to a UWB channel in response to receiving a UWB signal via said UWB channel and the control means (300) is configured to modify a transmission scheme of the transmitting means (100) on the basis of said channel information, for transmitting data via said UWB channel.

2. An apparatus according to claim 1, wherein the control means (300) is configure to adjust at least one of channel coding rate, modulation order and transmission power on the basis of the channel information.

3. A UWB signal transceiving method, comprising receiving a UWB pulse signal via a UWB channel and **characterised by**:
determining channel information relating to the UWB channel on the basis of the received UWB pulse signal; and
modifying a transmission scheme for data to be transmitted via the UWB channel on the basis of said channel characteristic.

4. A method according to claim 3, wherein at least one of channel coding rate, modulation order and transmission power is modified on the basis of the channel information.

5. An ultra wideband (UWB) transceiver, comprising:
a receiver configured to calculate channel information from a UWB pulse signal received over a UWB channel so that a UWB channel condition can be predicted and a data transmission scheme is changed according to the calculated channel information, whereby information transmission can be efficiently made according to the UWB channel condition.

6. The UWB transceiver as claimed in claim 5, wherein at least one of a channel coding rate, modulation order and transmission power is selectively changed according to the data transmission scheme.

7. The UWB transceiver as claimed in claim 6, wherein the channel coding rate is a ratio of the number of information bits to that of the total bits including the information bits and redundant bits that are added for reliable data transmission during coding through a channel encoder.

8. The UWB transceiver as claimed in claim 6, wherein the modulation order is an order associated with a modulation scheme, such as 4-PSK, 8-PSK and 16-PSK schemes, by which the data are modulated in a modulator.

9. The UWB transceiver as claimed in claim 5, wherein the channel information is a signal-to-noise ratio (SNR) calculated from the received UWB pulse signal.

10. The UWB transceiver as claimed in claim 5, wherein the UWB transceiver further comprises:
a transmitter including a processing means for modulating predetermined information into a UWB pulse signal and transmitting the modulated signal over the UWB channel by using a data transmission scheme determined according to the channel information; and
a baseband controller connected to the transmitter and the receiver, respectively, for generating a timing control signal for synchronization between the transmitter and receiver and extracting the channel information from the receiver and forwarding the channel information to the transmitter;
wherein the receiver includes a processing means for receiving the UWB pulse signal over the UWB channel and calculating the channel information capable of predicting the UWB channel condition, thereby obtaining original binary information.

11. The UWB transceiver as claimed in claim 10, wherein the transmitter comprises:
a channel encoder for performing channel coding for the information to be transmitted at a predetermined channel coding rate to be suitable for transmission over the UWB channel;
a modulator for modulating the information coded by the channel encoder into the UWB pulse signal in an analog format with a predetermined modulation order; and
an amplifier for adjusting transmission power of the UWB pulse signal output from the modulator to be suitable for the UWB channel transmission.

12. The UWB transceiver as claimed in claim 10, wherein the receiver comprises:
a correlation detector for calculating the channel information from the UWB pulse signal received over the UWB channel; and
a decoder for decoding a data sequence of the UWB pulse signal into an original signal.

13. The UWB transceiver as claimed in claim 10, wherein the baseband controller comprises:
a channel information processor for extracting the channel information calculated by the receiver and forwarding the channel information to the transmitter; and
a timing controller for generating a timing control signal for synchronization between the transmitter and receiver and transmitting the timing control signal to a timing synchronizer.

14. The UWB transceiver as claimed in claim 13, wherein the baseband controller further comprises a power controller for generating another control signal according to the channel information extracted by the channel information processor and controlling transmission power of the UWB pulse signal.

15. A UWB signal transmitting/receiving method, comprising the steps of:
receiving a UWB pulse signal through a UWB channel;
analyzing the received UWB pulse signal and providing channel information with which a state of the UWB channel can be predicted; and
determining a transmission scheme of information relative to information to be transmitted according to the channel information.

16. The method as claimed in claim 15, wherein at least one of a channel coding rate, modulation order and transmission power is selectively changed according to the information transmission scheme.

17. The method as claimed in claim 16, wherein the channel coding rate is a ratio of the number of information bits to that of the total bits including the information bits and redundant bits that are added for reliable data transmission during coding through a channel encoder.

18. The method as claimed in claim 16, wherein the modulation order is an order associated with a modulation scheme, such as 4-PSK, 8-PSK and 16-PSK schemes, by which the data are modulated in a modulator.

19. The method as claimed in claim 15, wherein the channel information is a signal-to-noise ratio (SNR) calculated from the received UWB pulse signal.

20. The method as claimed in claim 15, wherein the information transmission scheme performs channel coding for information at a lowest channel coding rate and determines modulation thereof with a lowest modulation order if the information to be transmitted comprises an initial transmission signal.

21. The method as claimed in claim 15, wherein the channel information is provided by a correlation detector provided in a receiver.
